# EUROPEAN PATENT SPECIFICATION

(11) **EP 3 829 142 B1**
(45) Date of publication and mention of the grant of the patent: **06.10.2021**
(21) Application number: 19211652.3
(22) Date of filing: 26.11.2019
(51) Int. Cl.: H04L 29/12, H04W 48/18

(54) **METHOD FOR SUPPORTING NAT FUNCTIONALITY IN A 5G CORE NETWORK AND NETWORK**
VERFAHREN ZUR UNTERSTÜTZUNG DER NAT-FUNKTIONALITÄT IN EINEM 5G-KERNNETZWERK UND NETZWERK
PROCÉDÉ DE PRISE EN CHARGE D'UNE FONCTIONNALITÉ NAT DANS UN RÉSEAU CENTRAL 5G ET RÉSEAU

(43) Date of publication of application: 02.06.2021
(73) Proprietor: Deutsche Telekom AG, 53113 Bonn (DE)
(72) Inventor: COLOM IKUNO, Josep, 2100 Korneuburg (AT); KOZA, Yvette Honorine, 2301 Mühlleiten (AT)
(74) Representative: Vossius & Partner Patentanwälte Rechtsanwälte mbB

(56) References cited:
- US-A1- 2019 182 875
- CISCO SYSTEMS: "Use of NRF for UPF discovery by SMF at PDU Session Establishment", 3GPP DRAFT; S2-1907591_23501_REL 16_UPF DISCOVERY AT PDU EST VIA NRF V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. Sapporo, Japan; 20190623 - 20190629 18 June 2019 (2019-06-18), XP051752557, Retrieved from the Internet: URL:http://www.3gpp.org/ftp/tsg%5Fsa/WG2%5 FArch/TSGS2%5F134%5FSapporo/Docs/S2%2D1907 591%2Ezip [retrieved on 2019-06-18]
- NOKIA ET AL: "23.501 6.3.3: NRF for UPF", 3GPP DRAFT; S2-177822 WAS S2-177543 NRF UPF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Ljubljana, SL; 20171023 - 20171027 27 October 2017 (2017-10-27), XP051347886, Retrieved from the Internet: URL:http://www.3gpp.org/ftp/Meetings_3GPP_ SYNC/SA2/Docs/ [retrieved on 2017-10-27]
- HUAWEI ET AL: "Discussion on support of NAT in 5GS", 3GPP DRAFT; S2-1911742, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, NV, USA; 20191118 - 20191122 8 November 2019 (2019-11-08), XP051821819, Retrieved from the Internet: URL:https://ftp.3gpp.org/tsg_sa/WG2_Arch/T SGS2_136_Reno/Docs/S2-1911742.zip S2-1911742 DP NAT rev1.doc [retrieved on 2019-11-08]
- SA2: "[Draft] LS reply on Support of Network Address Translation in the User Plane function", 3GPP DRAFT; S2-1911744, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno NV USA; 20191118 - 20191122 8 November 2019 (2019-11-08), XP051821821, Retrieved from the Internet: URL:https://ftp.3gpp.org/tsg_sa/WG2_Arch/T SGS2_136_Reno/Docs/S2-1911744.zip S2-1911744 LS NAT rev1.docx [retrieved on 2019-11-08]

## Description

### Field of the invention

This invention relates to a method for supporting Network Address Translation (NAT) functionality in a 5G Core Network and to a 5G Core Network adapted to perform NAT.

### Background

NAT is a process of mapping one IP address into another by modifying the network address information in the IP header of packets while they are in transit across a traffic routing device.

Quite commonly, communication networks make use of NAT in order to bridge between IPv4 and/or IPv6 domains, because of IP address scarcity or other reasons. In such networks, NAT of user traffic requires that IP packets traversing a NAT border get their headers rewritten.

A NAT border is generally defined as device (for example a router) which has one interface in a local (internal) network and one interface in an external network. When a packet is sent from the local network to the external network, the NAT converts that local (private) IP address to a global (public) IP address. Inversely, when a packet from the external network enters the local network, the global (public) IP address is converted to a local (private) IP address.

From outside, the user appears to have an IP address that is not the one seen by the user within the local network.

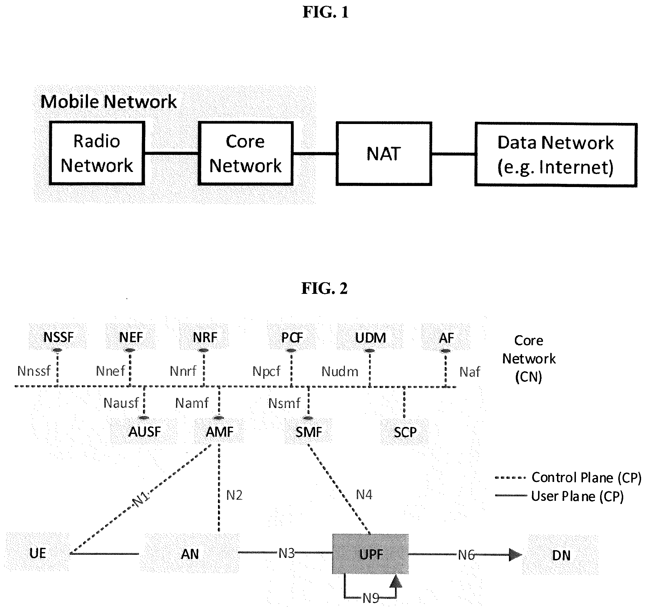

In mobile communication networks, NAT is typically deployed after the Core Network, and is thus transparent to the mobile network itself, see FIG. 1. FIG. 1 illustrates conventional NAT positioning within a mobile network system. The system comprises a radio network and a core network, which are part of the mobile network, and the NAT is deployed between the Core Network and a Data Network, such as, for example, the Internet. This deployment model is typically used in telecommunication networks and is known as network service chaining, as it consists of a chain of different services on the data path, each providing specific functionality. Other examples of services that are typically used in such a service chain after the mobile network would be firewall services, deep packet inspection, DPI, or parental control.

FIG. 2 shows the 5G architecture as standardized by 3GPP. A User Equipment (UE), e.g. a mobile phone or other device, is connected to a Radio Access Network (RAN). The RAN is connected to a Core Network (CN), which allows the UE to have connectivity to a Data Network (DN), e.g. an external data network, such as the Internet. Several Control Plane (CP) and UP interfaces are specified for the UPF. These are the N3 interface (RAN-UPF UP), the N4 interface (a Session Management Function, SMF-UPF CP), the N6 interface (UPF-DN UP).

Within the components of the 5G system (depicted in FIG. 2), the UPF is the Network Function (NF) tasked with user plane processing (i.e. traffic processing). While most of the Control Plane (CP) Network Functions (NFs) in the 5G core are based on HTTP/2 APIs, the interface between SMF and UPF is based on a binary protocol (PFCP).

In current 5G systems, NAT functionality is already deployed in mobile networks. However, NAT for telecommunications carrier use is typically called "Carrier-grade NAT" and is generally not trivial in terms of functionality and performance requirements, i.e. there is an established vendor ecosystem where NAT vendors are often not the same as mobile core vendors and customer connections to data services may pass through several different IP addressing domains. Document S2-1907591 "Use of NRF for UPF discovery by SMF at PDU Session Establishment", 18.06.2019. discloses UPF discovery using NRF by SMF. Document S2-1911742 "Discussion on support of NAT in 5GS", 08.11.2019, discloses UPFs supporting NAT functionalilty. Document S2-1911744, 08.11.2019 "LS reply on Support of Network Address Translation in the User Plane function", 08.11.2019, discloses UPFs supporting NAT.

Thus, there is a need for better integrating the NAT functionality within 5G systems, but without damaging the vendor ecosystem (i.e. avoid a situation where NAT can only be bought from large telecommunications core vendors). Furthermore, it is also desired that the addition of NAT functionality has a minimum impact on existing systems (i.e. ensure modularity when adding new features).

### Technical problem

In view of the above and taking advantage of the fact that NAT can be quite self-contained as a functionality, it is an object of the present invention to provide a modular, service-based architecture and implementation of a NAT capable User Plane Function (UPF) for 5G systems that make use of the subscriber and session information available in the 5G system to steer NAT functionality.

This object is achieved with the features of the claims.

The present invention addresses how NAT functionality is integrated in the 5G system architecture in a modular way, that is as an additional NF Service in the UPF; how other 5G system NFs, mainly the SMF, may interact with the NAT service and how NFs in the 5G system can discover the NAT service, as well as its capabilities via the Network Repository Function (NRF).

By using a Service Based Interface (SBI) for the NAT Network Function Service (NFS) communication, backwards-compatibility is achieved. The current PFCP-based N4 interface is not changed and NFs (e.g. SMFs) not supporting NAT NFS would not require any modification.

The present invention also addresses distributed UPF deployments, that is where the UPF functionality is spread over several components each potentially in a different location. In such a deployment, components in the 5G system can discover the most suitable NAT NFS based on parameters such as location and NAT capabilities.

According to the invention, a telecommunications operator could achieve a more advanced NAT on a more specific basis, such as, for example, perform NAT on a: per DNN basis, per slice basis, per PDU session basis, per subscriber basis, per IP range basis, per individual IP basis, etc.

### Summary of the invention

The above objects are achieved by the features of the independent claims.

According to a first aspect, the invention provides a method for supporting Network Address Translation, NAT, functionality in a 5G Core Network, CN, the 5G CN comprising at least one User Plane Function, UPF, at least one Session Management Function, SMF, and at least one Network Repository Function, NRF, wherein the UPF comprises a UPF Network Function, NF, profile and the UPF NF profile contains at least one NAT NF Service, NAT NFS, instance description, the method comprising: registering, at the NRF, the UPF NF profile, wherein the NAT NFS instance description includes information regarding which NAT functionality it supports; maintaining, at the NRF, the UPF NF profile and enabling the discovery of the UPF NF profile; choosing, by the SMF, which UPF serves a given User Equipment and/or Protocol Data Unit, PDU, session based on the NAT NFS information from the NRF which is available at the SMF; controlling, by the SMF, which of NAT functionality is to be performed based on NAT in at least one of: on a per DNN basis, on a per slice basis, on a per PDU session basis, on a per subscriber basis, on a per IP range basis and/or on a per individual IP basis, wherein the control of which of the NAT functionality is to be performed is done via a Service Based Interface, SBI, while maintaining Packet Forwarding Control Protocol, PFCP, in the N4 interface.

In these aspects, the step of choosing, by the SMF, which UPF serves a given User Equipment and/or Protocol Data Unit, PDU, session may comprise selecting a UPF location based on the availability of a specific NAT functionality in said UPF location.

In these aspects, the at least one registered NAT NFS instance description may comprise whether the NAT NFS supports at least one of: NAT44 functionality, NAT444 functionality, NAT64 functionality, DNS64 functionality and/or NAT46 functionality.

In these aspects, the NAT functionality may be provided on at least one of: per DNN basis, per slice basis, per PDU session basis, per IP range basis, per 5G subscriber and/or per individual IP.

In these aspects, registering the UPF NF profile may comprise listing in which locations the NAT NFS is available.

In these aspects, the NAT NFS may be integrated within the UPF and may expose an N6 interface towards an external Data Network, DN.

In these aspects, the NAT NFS may be standalone, wherein the standalone NAT NFS is connected between the UPF and an external Data Network, DN, and exposes an N6 interface to the external Data Network, and exposes another interface to the UPF, and wherein the another interface (N6') uses the same protocol stack as the N6 interface.

In these aspects, registering the UPF NF profile may comprise information whether the NAT NFS is standalone or integrated; and if the NAT NFS is standalone, the registering UPF NF profile into the NRF further comprises listing which interfaces the standalone NAT NFS provides for the another interface (N6') connectivity including IP address/addresses.

In these aspects, registering the UPF NF profile may comprise listing what functionalities it supports at each UPF location.

According to a second aspect, the invention provides a 5G Core Network, CN, adapted to perform Network Address Translation, NAT, the 5G CN comprising at least one User Plane Function, UPF, at least one Session Management Function, SMF, and at least one Network Repository Function, NRF, wherein the UPF comprises a UPF Network Function, NF, profile and the UPF NF profile contains at least one NAT NF Service, NAT NFS, instance description, wherein: the UPF NF profile is registered at the NRF, wherein the NAT NFS instance description includes information regarding which NAT functionality it supports; and the NRF is configured to maintain the registered UPF NF profile and to enable discovery of the UPF NF profile;, the SMF is configured to choose, which UPF serves a given User Equipment and/or Protocol Data Unit, PDU, session based on the NAT NFS information from the NRF which is available at the SMF; the SMF is configured to control which of NAT functionality is to be performed based on NAT in at least one of: on a per DNN basis, on a per slice basis, on a per PDU session basis, on a per subscriber basis, on a per IP range basis and/or on a per individual IP basis, wherein the control of which of the NAT functionality is to be performed is done via a Service Based Interface, SBI, while maintaining Packet Forwarding Control Protocol, PFCP, in the N4 interface.

In these aspects, the SMF may be configured to select a UPF location based on the availability of a specific NAT functionality in said UPF location.

In these aspects, the UPF NF profile may comprise a list of which locations the NAT NFS is available.

In these aspects, the at least one registered NAT NFS instance description may comprise whether the NAT NFS supports at least one of: NAT44 functionality, NAT444 functionality, NAT64 functionality, DNS64 functionality and/or NAT46 functionality.

In these aspects, the NAT functionality may be provided on at least one of: per DNN basis, per slice basis, per PDU session basis, per IP range basis, per 5G subscriber and/or per individual IP.

In these aspects, the UPF NF profile may comprise a list of what functionalities it supports at each UPF location.

In these aspects, the NAT NFS may be integrated within the UPF and exposes an N6 interface towards an external Data Network, DN, or the NAT NFS may be standalone, wherein the standalone NAT NFS being connected between the UPF and an external Data Network, DN, and configured to expose an N6 interface to the external Data Network, and to expose another interface to the UPF, and wherein the another interface (N6') may be configured to use the same protocol stack as the N6 interface.

In these aspects, the UPF NF profile may comprise information whether the NAT NFS is standalone or integrated; and if the NAT NFS is standalone, the UPF NF profile may further comprise a list of which interfaces the standalone NAT NFS provides for the another interface (N6') connectivity including IP address/addresses.

Other aspects, features, and advantages will be apparent from the summary above, as well as from the description that follows, including the figures and the claims.

### Brief description of the drawings

In the drawings:
- FIG. 1: illustrates conventional NAT positioning within a mobile network system.
- FIG. 2: illustrates the 5G architecture as standardized by 3GPP.
- FIG. 3: illustrates the principles of Network Function (NF) Service and NF Service Operation as defined by 3GPP.
- FIG. 4: illustrates a NAT NFS standalone variant according to an embodiment of the present invention.
- FIG. 5: illustrates a NAT NFS integrated variant according to an embodiment of the present invention.
- FIG. 6: illustrates the NAT NFS registration in a Network Repository Function (NRF).
- FIG. 7: illustrates the User Plane and the Data Plane architecture of NAT NFS using a distributed and integrated model according to the present invention.
- FIG. 8: illustrates the User Plane and the Data Plane architecture of NAT NFS using a distributed and standalone model according to the present invention.

### Detailed description of the invention

The present invention adds the NAT functionality into the 5G core by means of adding a NAT Network Function Service (NFS) to the UPF. The current standards of 3GPP define a Network Function (NF) as a 3GPP adopted or 3GPP defined processing function in a network, which has defined functional behavior, and 3GPP defined interfaces and a Network Function Service (NFS) as a functionality exposed by a NF through a service based interface and consumed by other authorized NFs.

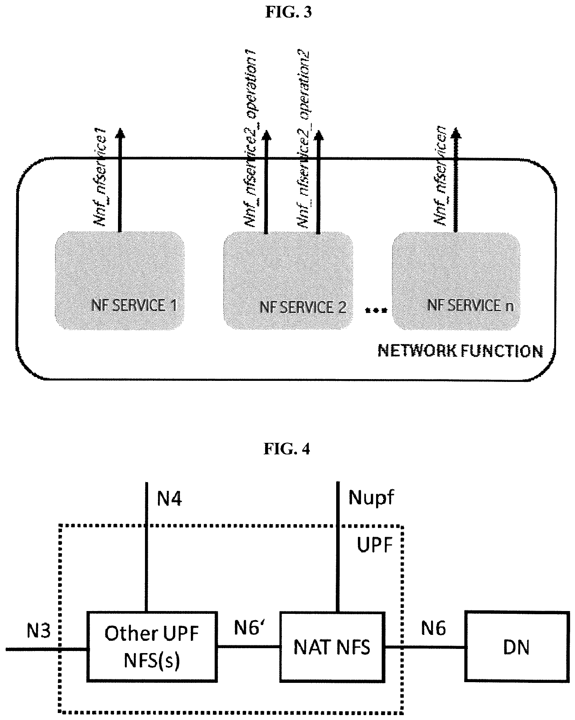

The present invention uses the same principles of NF and NFS, as defined by 3GPP, in order to add NAT functionality into the UPF. FIG. 3 illustrates the principles of Network Function (NF) Service and NF Service Operation as defined by 3GPP.

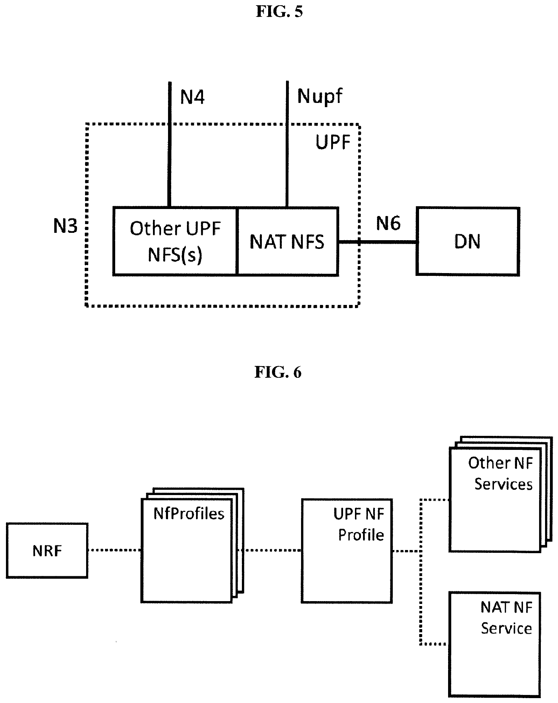

According to a preferred embodiment, two modes of NAT NFS are defined. In both alternatives, the NAT NFS is controlled via an exposed Service Based Interface (SBI) (referred to as Nupf in the figures). The two proposed modes of NAT NFS are:
- Standalone: A new N6' interface is defined for the data path between the current UPF interface and the NAT NFS (see FIG. 4). The N6' interface uses the same protocol stack as the conventional N6 interface (Gateway-Internet Local Area Network, GiLAN, interface in Evolved Packet Core, EPC). This configuration allows NAT functionality to be separately implemented (e.g. by a vendor different than the others in the rest of the UPF) and use a service chaining model as currently used.
- Integrated: The data path is internal within the UPF (see FIG. 5). This configuration allows for further optimizations within the data path such as performing all header changes within the same process in one step instead of two and a more integrated implementation.

According to a preferred embodiment, in order for other NFs or NFSs to be able to discover a NAT-capable UPF, the UPF NF profile, containing a NAT NFS instance description for each of the NAT NFS instances of the UPF, is registered (e.g., by the UPF itself or by another component such as an orchestrator) in the NRF. When choosing what UPF instance should serve a given UE and/or Protocol Data Unit (PDU) session, the SMF can take into account the available information in the UPF instance NF Profile, which includes the NAT NFS instance description information. FIG. 6 illustrates the UPF registration data stored in the NRF for a given UPF instance. The NF Profile contains the NF instance description registered information, as well as a list of NFS instance registration data.

According to a preferred embodiment, and additionally to 3GPP-defined information structures common to NFS instance registration, a NAT NFS instance registers any of the following information that can be used by the SMF to perform UPF selection:
- What NAT functionality it supports: e.g. NAT44 functionality, NAT444 functionality, NAT64 functionality, DNS64 functionality, NAT46,
- Location of the NAT NFS: the SMF may choose a geographically close location, e.g. in the case of a deployment using Mobile Edge Computing, MEC,
- Whether the NAT service is standalone or integrated,
- The Data Networks (DNs) this NAT NFS supports, specified as Data Network Names, DNNs.

According to a preferred embodiment, the two deployment modes of NAT NFS have the capability of supporting distributed deployments. This is due to the fact that the current UPF deployment model may change into a distributed model. The present invention assumes that the packet processing for certain data may be performed on a dedicated hardware, while other functionality may be deployed on, for example, off-the-shelf (COTS) network equipment which can be reprogrammed for specific telecommunication needs.

COTS-based network equipment are typically based on merchant silicon (a term used to describe chips which are designed and made by an entity other than the company providing a particular service in which they are used) optimized for Ethernet and/or IPv4/IPv6 packet processing and are capable of performing data processing of traffic at high capacity and low cost per traffic unit. Such merchant silicon is, however, not capable of processing the specific protocol stacks used in telecommunications.

Thus, according to a preferred embodiment, NAT NFS registers not only what capabilities it supports but also where such capabilities are supported. For example, a given location, server-based, may support extended functionality but low throughput, while another hardware-based location may support simple functionality but high throughput.

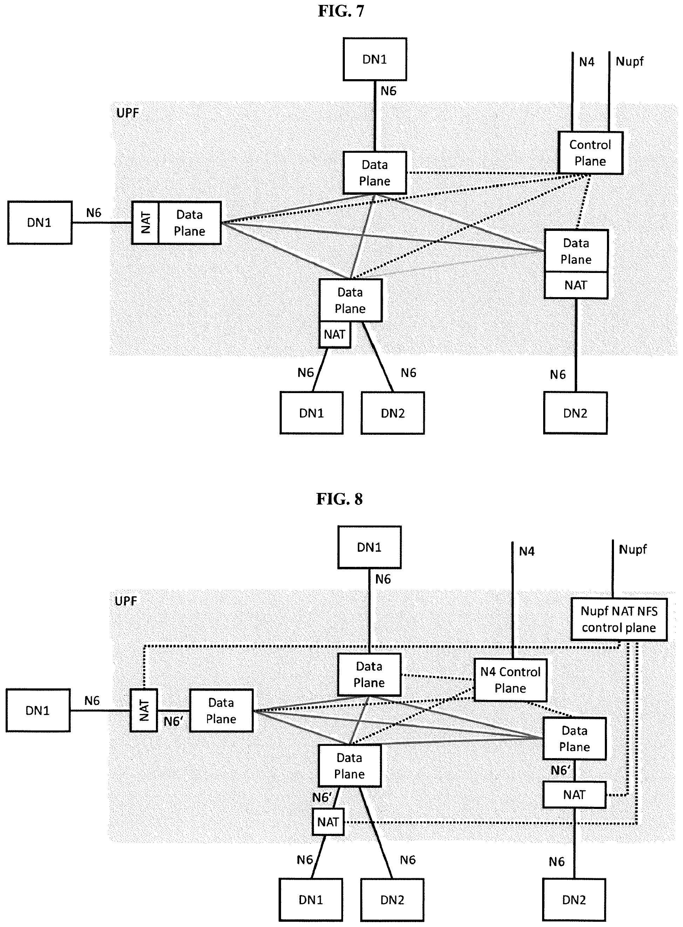

Referring to FIG. 7, there is illustrated the User Plane and the Data Plane architecture of NAT NFS using a distributed and integrated model according to a preferred embodiment.

As seen in FIG. 7, if the integrated model is used, a distributed UPF's control plane controls each of the UPF's locations where it is deployed. Alternatively, if a distributed and standalone model is used (see FIG. 8), a separate control plane for the NAT NFS (e.g. from a separate vendor) can be used, as there is a standardized interface for the data path between the NAT NFS and the rest of the UPF components.

Next, the control of the NAT NFS will be explained in detail.

The NAT NFS is not intended to perform charging, packet forwarding towards SMF via N4 or functions that would require a heavy packet interaction with the SMF. As such, a new exposed SBI (HTTP/2), as opposed to extending the functionality of the PFCP-based N4 interface, is used.

In order to setup a NAT rule in the UPF, the SMF uses the PDU session and subscriber information available to it, which is mainly the information stored in the SmContext and the subscriber information accessed via the Unified Data Management (UDM) as defined by 3GPP. Current mandatory information in SmContext is defined in 3GPP TS 29.502. Current mandatory subscriber information accessed via the UDM is defined in 3GPP TS 29.503.

According to a preferred embodiment, the following types of SmContext parameters may be used for setting up a NAT rule in the UPF, either alone or a combination of: the PDU Session Identifier; the Data Network Name (DNN); the Single Network Slice Selection Assistance Information (SNSSAI); the Identifier of the serving NF (e.g. serving Access Management Function, AMF); the serving core network operator Public Land Mobile Network Identifier (PLMN ID) and, for Standalone Non-Public Networks (SNPN), the Network Interface Device (NID); the Access Network Type; the callback Uniform Resource Identified (URI); the PDU Session type; the Session and Service Continuity (SCC) mode applicable to the PDU session; the Session Aggregate Maximum Bit Rate (AMBR) granted to the PDU session; the set of Quality of Service (QoS) flow(s) to establish for the PDU session.

According to a preferred embodiment, the following types of subscriber information which the SMF can access by querying the UDM (see FIG. 2) may be used: for each slice the subscriber is subscribed to or globally for the given subscriber, NAT type to be performed, and/or the external (NAT-ed) IP address of the subscriber (i.e. static Network Address Translating for a given subscriber).

In addition, in the case were the NAT NFS is standalone, the SMF also includes N6' addressing so that the NAT NFS can properly identify incoming packets and/or send outgoing packets to the correct target as well.

## Claims

1. A method for supporting Network Address Translation, NAT, functionality in a 5G Core Network, CN, the 5G CN comprising at least one User Plane Function, UPF, at least one Session Management Function, SMF, and at least one Network Repository Function, NRF, wherein the UPF comprises a UPF Network Function, NF, profile and the UPF NF profile contains at least one NAT NF Service, NAT NFS, instance description, the method comprising:
registering, at the NRF, the UPF NF profile, wherein the NAT NFS instance description includes information regarding which NAT functionality it supports;
maintaining, at the NRF, the UPF NF profile and enabling the discovery of the UPF NF profile;
choosing, by the SMF, which UPF serves a given User Equipment and/or Protocol Data Unit, PDU, session based on the NAT NFS information from the NRF which is available at the SMF;
controlling, by the SMF, which of NAT functionality is to be performed based on NAT in at least one of: on a per DNN basis, on a per slice basis, on a per PDU session basis, on a per subscriber basis, on a per IP range basis and/or on a per individual IP basis,
wherein the control of which of the NAT functionality is to be performed is done via a Service Based Interface, SBI, while maintaining Packet Forwarding Control Protocol, PFCP, in the N4 interface.

2. The method of claim 1, wherein the step of choosing, by the SMF, which UPF serves a given User Equipment and/or Protocol Data Unit, PDU, session comprises selecting a UPF location based on the availability of a specific NAT functionality in said UPF location.

3. The method of claim 1 or 2, wherein the at least one registered NAT NFS instance description comprises whether the NAT NFS supports at least one of: NAT44 functionality, NAT444 functionality, NAT64 functionality, DNS64 functionality and/or NAT46 functionality, and/ or
wherein the NAT functionality is provided on at least one of: per DNN basis, per slice basis, per PDU session basis, per IP range basis, per 5G subscriber and/or per individual IP, and/or
wherein registering the UPF NF profile comprises listing in which locations the NAT NFS is available.

4. The method of any one of claims 1 to 3, wherein the NAT NFS is integrated within the UPF and exposes an N6 interface towards an external Data Network, DN.

5. The method of any one of claims 1 to 3, wherein the NAT NFS is standalone,
wherein the standalone NAT NFS is connected between the UPF and an external Data Network, DN, and exposes an N6 interface to the external Data Network, and exposes another interface to the UPF, and
wherein the another interface (N6') uses the same protocol stack as the N6 interface.

6. The method of any one of claims 4 or 5, wherein registering the UPF NF profile comprises information whether the NAT NFS is standalone or integrated; and
if the NAT NFS is standalone, the registering UPF NF profile into the NRF further comprises listing which interfaces the standalone NAT NFS provides for the another interface (N6') connectivity including IP address/addresses.

7. The method of any one of claims 1 to 6, wherein registering the UPF NF profile comprises listing what functionalities it supports at each UPF location.

8. A 5G Core Network, CN, adapted to perform Network Address Translation, NAT, the 5G CN comprising at least one User Plane Function, UPF, at least one Session Management Function, SMF, and at least one Network Repository Function, NRF, wherein the UPF comprises a UPF Network Function, NF, profile and the UPF NF profile contains at least one NAT NF Service, NAT NFS, instance description, wherein:
the UPF NF profile is registered at the NRF, wherein the NAT NFS instance description includes information regarding which NAT functionality it supports; and
the NRF is configured to maintain the registered UPF NF profile and to enable discovery of the UPF NF profile;
the SMF is configured to choose, which UPF serves a given User Equipment and/or Protocol Data Unit, PDU, session based on the NAT NFS information from the NRF which is available at the SMF;
the SMF is configured to control which of NAT functionality is to be performed based on NAT in at least one of: on a per DNN basis, on a per slice basis, on a per PDU session basis, on a per subscriber basis, on a per IP range basis and/or on a per individual IP basis,
wherein the control of which of the NAT functionality is to be performed is done via a Service Based Interface, SBI, while maintaining Packet Forwarding Control Protocol, PFCP, in the N4 interface.

9. The 5G Core Network of claim 8,
wherein the SMF is configured to select a UPF location based on the availability of a specific NAT functionality in said UPF location.

10. The 5G Core Network of claim 8 or 9, wherein the at least one registered NAT NFS instance description comprises whether the NAT NFS supports at least one of: NAT44 functionality, NAT444 functionality, NAT64 functionality, DNS64 functionality and/or NAT46 functionality, and/or
wherein the NAT functionality is provided on at least one of: per DNN basis, per slice basis, per PDU session basis, per IP range basis, per 5G subscriber and/or per individual IP and/or
wherein the UPF NF profile comprises a list of what functionalities it supports at each UPF location.

11. The 5G Core Network of any one of claims 8 to 10,
wherein the NAT NFS is integrated within the UPF and exposes an N6 interface towards an external Data Network, DN.

12. The 5G Core Network of any one of claims 8 to 10, wherein the NAT NFS is standalone, the standalone NAT NFS being connected between the UPF and an external Data Network, DN, and configured to expose an N6 interface to the external Data Network, and to expose another interface to the UPF, and
wherein the another interface (N6') is configured to use the same protocol stack as the N6 interface.

13. The 5G Core Network claim 11 or 12, wherein the UPF NF profile comprises information whether the NAT NFS is standalone or integrated; and
if the NAT NFS is standalone, the UPF NF profile further comprises a list of which interfaces the standalone NAT NFS provides for the another interface (N6') connectivity including IP address/addresses.

14. The 5G Core Network of any one of claims 8 to 13, wherein the registration of the UPF NF profile comprises listing what functionalities it supports at each UPF location.

## Patentansprüche

1. Verfahren zum Unterstützen einer Netzwerkadressübersetzungs-, NAT, Funktionalität in einem 5G-Kernnetzwerk, CN, wobei das 5G-CN mindestens eine Benutzerebenenfunktion, UPF, mindestens eine Sitzungsverwaltungsfunktion, SMF, und mindestens eine Netzwerk-Repository-Funktion, NRF aufweist, wobei die UPF ein UPF-Netzwerkfunktions-, NF, Profil aufweist und das UPF-NF-Profil mindestens eine NAT-NF-Dienst-, NAT-NFS, Instanzbeschreibung enthält, wobei das Verfahren aufweist:
Registrieren des UPF-NF-Profils bei der NRF, wobei die NAT-NFS-Instanzbeschreibung Informationen enthält, die die NAT-Funktionalität betreffen, die sie unterstützt;
Aufrechterhalten des UPF-NF-Profils bei der NRF und Ermöglichen der Ermittlung des UPF-NF-Profils;
Auswählen durch die SMF, welche UPF eine gegebene Benutzereinrichtung und/oder Protokolldateneinheits-, PDU, Sitzung bedient, beruhend auf den NAT-NFS-Informationen von der NRF, die bei der SMF verfügbar sind;
Steuern durch die SMF, welche NAT-Funktionalität beruhend auf NAT auf mindestens einem von ausgeführt werden soll: auf einer Pro-DNN-Grundlage, auf einer Pro-Slice-Grundlage, auf einer Pro-PDU-Sitzungsbasis, auf einer Pro-Teilnehmerbasis, auf einer Pro-IP-Bereichsbasis und/oder auf einer Pro-Einzel-IP-Grundlage,
wobei die Steuerung, welche der NAT-Funktionalität ausgeführt werden soll, über eine dienstbasierte Schnittstelle, SBI, erfolgt, während das Paketweiterleitungssteuerprotokoll, PFCP, in der N4-Schnittstelle aufrechterhalten wird.

2. Verfahren nach Anspruch 1, wobei der Schritt des Auswählens durch die SMF, welche UPF eine gegebene Benutzereinrichtung und/oder Protokolldateneinheits-, PDU, Sitzung bedient, das Auswählen eines UPF-Standorts beruhend auf der Verfügbarkeit einer spezifischen NAT-Funktionalität in dem UPF-Standort aufweist.

3. Verfahren nach Anspruch 1 oder 2, wobei die mindestens eine registrierte NAT-NFS-Instanzbeschreibung aufweist, ob der NAT-NFS mindestens eine unterstützt von:
NAT44-Funktionalität, NAT444-Funktionalität, NAT64-Funktionalität, DNS64-Funktionalität und/oder NAT46-Funktionalität, und/ oder
wobei die NAT-Funktionalität auf mindestens einer bereitgestellt wird von: Pro-DNN-Grundlage, Pro-Slice-Grundlage, Pro-PDU-Sitzungsbasis, Pro-IP-Bereichsbasis, Pro-5G-Teilnehmer und/oder Pro-Einzel-IP, und/oder
wobei das Registrieren des UPF-NF-Profils das Auflisten aufweist, an welchen Standorten der NAT-NFS verfügbar ist.

4. Verfahren nach einem der Ansprüche 1 bis 3, wobei der NAT-NFS in die UPF integriert ist und eine N6-Schnittstelle zu einem externen Datennetzwerk, DN, offenlegt.

5. Verfahren nach einem der Ansprüche 1 bis 3, wobei der NAT-NFS eigenständig ist, wobei der eigenständige NAT-NFS zwischen die UPF und ein externes Datennetzwerk, DN, geschaltet ist und dem externen Datennetzwerk eine N6-Schnittstelle offenlegt, und der UPF eine andere Schnittstelle offenlegt, und
wobei die andere Schnittstelle (N6') denselben Protokollstapel wie die N6-Schnittstelle verwendet.

6. Verfahren nach einem der Ansprüche 4 oder 5, wobei das Registrieren des UPF-NF-Profils Informationen aufweist, ob der NAT-NFS eigenständig oder integriert ist; und wenn der NAT-NFS eigenständig ist, das Registrieren des UPF-NF-Profils in der NRF ferner das Auflisten aufweist, welche Schnittstellen der eigenständige NAT-NFS für die Konnektivität der anderen Schnittstelle (N6') einschließlich einer oder mehrerer IP-Adressen bereitstellt.

7. Verfahren nach einem der Ansprüche 1 bis 6, wobei das Registrieren des UPF-NF-Profils das Auflisten aufweist, welche Funktionalitäten es an jedem UPF-Standort unterstützt.

8. 5G-Kernnetzwerk, CN, das eingerichtet ist, eine Netzwerkadressübersetzung, NAT, durchzuführen, wobei das 5G-CN mindestens eine Benutzerebenenfunktion, UPF, mindestens eine Sitzungsverwaltungsfunktion, SMF, und mindestens eine Netzwerk-Repository-Funktion, NRF, aufweist, wobei die UPF ein UPF-Netzwerkfunktions-, NF, Profil aufweist und das UPF-NF-Profil mindestens eine NAT-NF-Dienst-, NAT-NFS, Instanzbeschreibung enthält, wobei:
das UPF-NF-Profil bei der NRF registriert ist, wobei die NAT-NFS-Instanzbeschreibung Informationen enthält, die die NAT-Funktionalität betreffen, die es unterstützt; und
die NRF konfiguriert ist, das registrierte UPF-NF-Profil aufrechtzuerhalten und eine Ermittlung des UPF-NF-Profils zu ermöglichen;
die SMF konfiguriert ist, beruhend auf den NAT-NFS-Informationen von der NRF, die bei der SMF verfügbar sind, auszuwählen, welche UPF eine gegebene Benutzereinrichtung und/oder Protokolldateneinheits-, PDU, Sitzung bedient;
die SMF konfiguriert ist, zu steuern, welche NAT-Funktionalität beruhend auf NAT auf mindestens einem ausgeführt werden soll von: auf einer Pro-DNN-Grundlage, auf einer Pro-Slice-Grundlage, auf einer Pro-PDU-Sitzungsbasis, auf einer Pro-Teilnehmerbasis, auf einer Pro-IP-Bereichsbasis und/oder auf einer Pro-Einzel-IP-Grundlage,
wobei die Steuerung, welche der NAT-Funktionalität ausgeführt werden soll, über eine dienstbasierte Schnittstelle, SBI, erfolgt, während das Paketweiterleitungssteuerprotokoll, PFCP, in der N4-Schnittstelle aufrechterhalten wird.

9. 5G-Kernnetzwerk nach Anspruch 8,
wobei die SMF konfiguriert ist, einen UPF-Standort beruhend auf der Verfügbarkeit einer spezifischen NAT-Funktionalität in dem UPF-Standort auszuwählen.

10. 5G-Kernnetzwerk nach Anspruch 8 oder 9, wobei die mindestens eine registrierte NAT-NFS-Instanzbeschreibung aufweist, ob der NAT-NFS mindestens eine unterstützt von:
NAT44-Funktionalität, NAT444-Funktionalität, NAT64-Funktionalität, DNS64-Funktionalität und/oder NAT46-Funktionalität, und/oder
wobei die NAT-Funktionalität auf mindestens einer bereitgestellt wird von: Pro-DNN-Grundlage, Pro-Slice-Grundlage, Pro-PDU-Sitzungsbasis, Pro-IP-Bereichsbasis, Pro-5G-Teilnehmer und/oder Pro-Einzel-IP und/oder
wobei das UPF-NF-Profil eine Liste aufweist, welche Funktionalitäten es an jedem UPF-Standort unterstützt.

11. 5G-Kernnetzwerk nach einem der Ansprüche 8 bis 10, wobei der NAT-NFS in die UPF integriert ist und eine N6-Schnittstelle zu einem externen Datennetzwerk, DN, offenlegt.

12. 5G-Kernnetzwerk nach einem der Ansprüche 8 bis 10, wobei der NAT-NFS eigenständig ist, wobei der eigenständige NAT-NFS zwischen die UPF und ein externes Datennetzwerk, DN, geschaltet und konfiguriert ist, dem externen Datennetzwerk eine N6-Schnittstelle offenzulegen und der UPF eine andere Schnittstelle offenzulegen, und
wobei die andere Schnittstelle (N6') konfiguriert ist, denselben Protokollstapel wie die N6-Schnittstelle zu verwenden.

13. 5G-Kernnetzwerk nach Anspruch 11 oder 12, wobei das UPF-NF-Profil Informationen aufweist, ob der NAT-NFS eigenständig oder integriert ist; und
wenn der NAT-NFS eigenständig ist, das UPF-NF-Profil eine Liste aufweist, welche Schnittstellen der eigenständige NAT-NFS für die Konnektivität der anderen Schnittstelle (N6') einschließlich einer oder mehrerer IP-Adressen bereitstellt.

14. 5G-Kernnetzwerk nach einem der Ansprüche 8 bis 13, wobei die Registrierung des UPF-NF-Profils das Auflisten aufweist, welche Funktionalitäten es an jedem UPF-Standort unterstützt.

## Revendications

1. Procédé d'assistance d'une fonctionnalité de traduction d'adresse réseau, NAT, dans un réseau principal 5G, CN, ledit CN 5G comprenant au moins une fonction de plan d'utilisateur, UPF, au moins une fonction de gestion de session, SMF, et au moins une fonction de référentiel de réseau, NRF, l'UPF comprenant un profil de fonction de réseau, NF, UPF et ledit profil NF UPF contenant au moins une description d'instance de service NF NAT, NFS NAT, ledit procédé comprenant :
l'enregistrement, au niveau de la NRF, du profil NF UPF, la description d'instance de service NFS NAT comprenant des informations relatives à la fonctionnalité NAT assistée ;
le maintien, au niveau de la NRF, du profil NF UPF et la possibilité de découverte du profil NF UPF ;
la sélection par la SMF de l'UPF desservant un équipement utilisateur donné et/ou une session d'unité de données de protocole, PDU, sur la base des informations NFS NAT de la NRF disponibles au niveau de la SMF ;
la commande, par la SMF, de la fonctionnalité NAT devant être exécutée basée sur la NAT sur au moins une des bases suivantes : une base par DNN, une base par tranche, une base par session PDU, une base par abonné, une base par plage IP et/ou une base par IP individuelle,
où la commande de la fonctionnalité NAT devant être exécutée est réalisée via une interface basée service, SBI, en maintenant un protocole de commande d'acheminement de paquet, PFCP, dans l'interface N4.

2. Procédé selon la revendication 1, où l'étape de sélection, par la SMF, de l'UPF desservant un équipement utilisateur et/ou une session d'unité de données de protocole, PDU, comprend la sélection d'un emplacement UPF sur la base de la disponibilité d'une fonctionnalité NAT spécifique sur ledit emplacement UPF.

3. Procédé selon la revendication 1 ou la revendication 2, où ladite au moins une description d'instance NFS NAT enregistrée comprend si la NFS NAT assiste au moins une des fonctionnalités suivantes : fonctionnalité NAT44, fonctionnalité NAT444, fonctionnalité NAT64, fonctionnalité DNS64 et/ou fonctionnalité NAT46, et/ou où la fonctionnalité NAT est réalisée sur au moins une des bases suivantes : par DNN, par tranche, par session PDU, par plage IP, par abonné 5G et/ou par IP individuelle, et/ou où l'enregistrement du profil NF UPF comprend le listage des emplacements où la NFS NAT est disponible.

4. Procédé selon l'une des revendications 1 à 3, où la NFS NAT est intégrée à l'intérieur de l'UPF et expose une interface N6 vers un réseau de données externe, DN.

5. Procédé selon l'une des revendications 1 à 3, où la NFS NAT est autonome,
où la NFS NAT autonome est connectée entre l'UPF et un réseau de données externe, DN, et expose une interface N6 vers le réseau de données externe, et expose une autre interface à l'UPF , et
où l'autre interface (N6') utilise la même pile de protocole que l'interface N6.

6. Procédé selon la revendication 4 ou la revendication 5, où l'enregistrement du profil NF UPF comprend des informations si la NFS NAT est autonome ou intégrée ; et,
si la NFS NAT est autonome, le profil d'enregistrement NF UPF dans la NRF comprend en outre le listage des interfaces fournies par la NFS NAT autonome pour la connectivité de l'autre interface (N6') comprenant une adresse/des adresses IP.

7. Procédé selon l'une des revendications 1 à 6, où l'enregistrement du profil NF UPF comprend le listage des fonctionnalités assistées sur chaque emplacement UPF.

8. Réseau principal 5G, CN, apte à exécuter une traduction d'adresse réseau, NAT, ledit CN 5G comprenant au moins une fonction de plan d'utilisateur, UPF, au moins une fonction de gestion de session, SMF, et au moins une fonction de référentiel de réseau, NRF, l'UPF comprenant un profil de fonction de réseau, NF, UPF et ledit profil NF UPF contenant au moins une description d'instance de service NF NAT, NFS NAT, où :
le profil NF UPF est enregistré au niveau de la NRF, la description d'instance de service NFS NAT comprenant des informations relatives à la fonctionnalité NAT assistée ; et
la NRF étant configurée pour maintenir le profil NF UPF enregistrer et pour permettre la découverte du profil NF UPF ;
la SMF étant configurée pour sélectionner l'UPF desservant un équipement utilisateur donné et/ou une session d'unité de données de protocole, PDU, sur la base des informations NFS NAT de la NRF disponibles au niveau de la SMF ;
la SMF étant configurée pour commander la fonctionnalité NAT devant être exécutée basée sur la NAT sur au moins une des bases suivantes : une base par DNN, une base par tranche, une base par session PDU, une base par abonné, une base par plage IP et/ou une base par IP individuelle,
où la commande de la fonctionnalité NAT devant être exécutée est réalisée via une interface basée service, SBI, en maintenant un protocole de commande d'acheminement de paquet, PFCP, dans l'interface N4.

9. Réseau principal 5G selon la revendication 8,
où la SMF est configurée pour sélectionner un emplacement UPF sur la base de la disponibilité d'une fonctionnalité NAT spécifique sur ledit emplacement UPF.

10. Réseau principal 5G selon la revendication 8 ou la revendication 9, où ladite au moins une description d'instance NFS NAT enregistrée comprend si la NFS NAT assiste au moins une des fonctionnalités suivantes : fonctionnalité NAT44, fonctionnalité NAT444, fonctionnalité NAT64, fonctionnalité DNS64 et/ou fonctionnalité NAT46, et/ou où la fonctionnalité NAT est réalisée sur au moins une des bases suivantes : par DNN, par tranche, par session PDU, par plage IP, par abonné 5G et/ou par IP individuelle, et/ou où le profil NF UPF comprend une liste des fonctionnalités assistées sur chaque emplacement UPF.

11. Réseau principal 5G selon l'une des revendications 8 à 10,
où la NFS NAT est intégrée à l'intérieur de l'UPF et expose une interface N6 vers un réseau de données externe, DN.

12. Réseau principal 5G selon l'une des revendications 8 à 10, où la NFS NAT est autonome, la NFS NAT autonome étant connectée entre l'UPF et un réseau de données externe, DN, et configurée pour exposer une interface N6 au réseau de données externe, et pour exposer une autre interface à l'UPF , et
où l'autre interface (N6') est configurée pour utiliser la même pile de protocole que l'interface N6.

13. Réseau principal 5G selon la revendication 11 ou la revendication 12, où le profil NF UPF comprend des informations si la NFS NAT est autonome ou intégrée ; et,
si la NFS NAT est autonome, le profil NF UPF comprend en outre une liste des interfaces fournies par la NFS NAT autonome pour la connectivité de l'autre interface (N6') comprenant une adresse/des adresses IP.

14. Réseau principal 5G selon l'une des revendications 8 à 13, où l'enregistrement du profil NF UPF comprend le listage des fonctionnalités assistées sur chaque emplacement UPF.
